# EUROPÄISCHE PATENTSCHRIFT

(11) **EP 3 207 547 B1**
(45) Veröffentlichungstag und Bekanntmachung des Hinweises auf die Patenterteilung: **20.08.2025**
(21) Anmeldenummer: 15781847.7
(22) Anmeldetag: 04.09.2015
(51) Int. Cl.: H01B 3/40, H01F 41/02, B32B 15/08, B32B 15/092, B32B 15/098, C21D 9/46

(54) **COIL UND VERFAHREN ZUR HERSTELLUNG EINES ZU EINEM COIL AUFGEHASPELTEN ELEKTROBANDLAMINATS**
COIL AND METHOD FOR PRODUCING AN ELECTRIC STRIP LAMINATE WOUND AS A COIL
BOBINE ET PROCÉDÉ DE PRODUCTION D'UN STRATIFIÉ DE BANDES MAGNÉTIQUES ENROULÉES EN UNE BOBINE

(30) Priorität: 05.09.2014 AT 506152014
(43) Veröffentlichungstag der Anmeldung: 23.08.2017
(73) Patentinhaber: voestalpine Stahl GmbH, 4020 Linz (AT)
(72) Erfinder: KERN, Carina, 4020 Linz (AT); FLUCH, Ronald, 4020 Linz (AT)
(74) Vertreter: Jell, Friedrich
(86) Internationale Anmeldenummer: PCT/AT2015/050215
(87) Internationale Veröffentlichungsnummer: WO 2016/033630

(56) Entgegenhaltungen:
- WO-A1-2007/116047
- DE-A1- 3 033 378
- DE-T2- 69 611 009

## Beschreibung

### Technisches Gebiet

Die Erfindung betrifft ein Coil und ein Verfahren zur Herstellung eines zu einem Coil aufgehaspelten Elektrobandlaminats, bei dem mindestens zwei elektrisch voneinander isolierte metallische Elektrobänder zu einem Elektrobandlaminat stoffschlüssig verbunden und in einem weiteren Schritt zu einem Coil aufgehaspelt werden.

### Stand der Technik

Aus dem Stand der Technik sind Coils aus einem mit Backlack beschichteten Elektroband bekannt. Aus diesen Coils werden unter anderem backlackbeschichtete Blechteile für Blechpakete, beispielsweise für elektrische Maschinen, abgetrennt. Dabei wird die Produktionszeit solcher Blechpakete nicht unwesentlich durch das Abtrennen der einzelnen Blechteile bestimmt.

Um diesen Zeitaufwand zu minimieren, schlägt die DE3033378A1 ein Coil aus einem mehrschichtigen Elektrobandlaminat vor. Dieses Elektrobandlaminat wird beispielsweise durch Verkleben zweier Elektrobänder hergestellt, die je über eine Beschichtung elektrisch voneinander isoliert sind. Als Beschichtung wird eine Auswahl aus einer Phosphatglas, Magnesiumsilikat und Phosphatglas über Magnesiumsilikat umfassenden Gruppe vorgeschlagen. Zum stoffschlüssigen Verbinden dieser beschichteten Elektrobänder wird ein Haftmittel herangezogen, das beispielsweise ein phenolischer Klebstoff, Epoxi-Klebstoff oder Klebemittel auf Kunstharzbasis sein kann. Wie die DE3033378A1 weiter ausführt, muss dieses Haftmittel für eine ausreichend feste stoffschlüssige Verbindung zwischen den Beschichtungen des Elektrobands sorgen, um damit die fehlerfreie Weiterverarbeitung des Elektrobandlaminats, beispielsweise ein Haspeln zu einem Coil, zu ermöglichen. Fehler an der Fügestelle können nämlich bei der Weiterverarbeitung zu einer Beschädigung des Laminats und damit aufgrund von auftretenden Kurzschlüssen zwischen den Elektroblechen zu einer beeinträchtigten magnetischen bzw. elektromagnetischen Eigenschaft des Elektrobandlaminats führen. Eine erhöhte Sorgfalt beim Fügen der beschichteten Elektrobänder muss daher gewährleistet sein, wodurch sich das Herstellungsverfahren folglich erschwert, und einer vergleichsweise hohen Reproduzierbarkeit entgegensteht.

Aus der WO2007/116047A1 ist ein Verfahren bekannt, bei dem drei Elektrobänder zu einem Elektrobandlaminat verklebt werden. Hierzu wird auf ein mittleres Elektroband der drei Elektrobänder beidseitig eine Klebeschicht aufgebracht.

Zudem sind mit Lack beschichtete Elektrobleche aus der DE69611009T2 bekannt.

### Darstellung der Erfindung

Die Erfindung hat sich daher die Aufgabe gestellt, ein Verfahren zur Herstellung eines Coils aus einem Elektrobandlaminat zu vereinfachen und damit hohe Reproduzierbarkeit sicherzustellen. Zudem soll das Coil hohe Standfestigkeit aufweisen.

Die Erfindung löst die gestellte Aufgabe hinsichtlich des Verfahrens durch die Merkmale des Anspruchs 1.

Werden die jeweils auf mindestens einer Flachseite mit einer Backlackschicht elektrisch isolierten Elektrobänder über einander zugewandte Backlackschichten aneinandergefügt, kann zunächst eine erhöhte Kurzschlusssicherheit erreicht werden, da die einander zugewandten Flachseiten vor dem Zusammenfügen jeweils eine elektrisch isolierende Schicht aufweisen. Im Gegensatz dem Stand der Technik kann durch diese beiden Beschichtungen zudem auf die Verwendung eines zusätzlichen Klebstoffs zum stoffschlüssigen Fügen der Elektrobänder verzichtet werden, weil die Elektrobänder durch Aktivierung der chemischen Vernetzung der beiden Backlackschichten miteinander zu einem Elektrobandlaminat stoffschlüssig verbunden werden. Dadurch, dass das Auftragen von zusätzlichem Klebstoff auf den Fügebereich zwischen den elektrisch isolierenden Beschichtungen unterbleiben kann, kann auch die Gefahr von Fügefehlern reduziert werden. Des Weiteren kann durch eine chemische Vernetzung beider Backlackschichten eine besonders gleichmäßige stoffschlüssige Verbindung zwischen den Elektrobändern gewährleistet werden - das dann wiederum insbesondere einem beschädigungsfreien Haspeln des Elektrobandlaminats zu einem Coil zugutekommt. Die weitere Verwendung solch eines Elektrobandlaminats kann daher mit geringerer Kurzschlussgefahr erfolgen, weshalb auch nicht mit einer verschlechterten elektromagnetischen Eigenschaft am aufgehaspelten Elektrobandlaminat zu rechnen ist. Durch das erfindungsgemäße stoffschlüssige Verbinden zweier backlackbeschichteter Elektrobänder zu einem Elektrobandlaminat - ohne hierzu zusätzlich Klebstoff verwenden zu müssen -, kann daher ein besonders einfaches und kostengünstiges Verfahren mit vergleichsweise hoher Reproduzierbarkeit sichergestellt werden.

Im Allgemeinen wird festgehalten, dass unter einem Coil ein zu einem Bund aufgewickeltes bzw. aufgehaspeltes Metallband verstanden werden kann, das als Habzeug zur Weiterverarbeitung abgewickelt bzw. abgehaspelt wird.

Im Allgemeinen können sich thermoplastische und/oder duroplastische Backlacke bewähren. Backlacke auf Basis von Polyvinylbutyral, Polyamide oder Epoxidharz sind im Allgemeinen ebenfalls vorstellbar. Unter Elektroband kann unter anderem ein Elektrostahlband oder auch ein Siliziumstahlband etc. verstanden werden.

Das stoffschlüssige Verbinden der beiden Backlackschichten kann beschleunigt werden, wenn auf mindestens einer Backlackschicht ein Katalysator, insbesondere ein Amin, aufgebracht wird. In diesem Zusammenhang hat sich insbesondere ein Aufsprühen des Katalysators bewährt, da dies unter anderem besonders gleichmäßig erfolgen kann.

Hierzu kann sich als Armin besonders 1-Methylimidazole, 2-Methylimidazole und/oder 1,2-Diaminocyclohexan auszeichnen.

Werden die Backlackschichten zu ihrer chemischen Vernetzung thermisch aktiviert, kann sich das Verfahren in seiner Handhabung weiter vereinfachen.

Werden beschichtete Elektrobänder zu einem Elektrobandlaminat zusammengefügt, von denen mindestens ein Elektroband auf beiden seiner Flachseiten mit einer Backlackschicht elektrisch isoliert ist, kann es sich als vorteilhaft hinsichtlich der weiteren Verarbeitung des Elektrobandlaminats herausstellen, wenn die Aktivierungstemperatur zur chemischen Vernetzung der Backlackschichten auf den einander zugewandten Flachseiten unter der Aktivierungstemperatur der auf der abgewandten Flachseite vorgesehenen Backlackschicht liegt. Damit kann unter anderem sichergestellt werden, dass sich das zu einem Coil aufgehaspelte Elektrobandlaminat beschädigungsfrei abhaspeln und weiterverarbeiten lässt.

Werden beschichtete Elektrobänder zu einem Elektrobandlaminat zusammengefügt, von denen mindestens ein Elektroband eine vernetzte, polymere und elektrische Isolationsschicht auf der Flachseite, die der mit Backlack beschichteten Flachseite gegenüberliegt, aufweist, kann sich dies ebenfalls als vorteilhaft hinsichtlich der weiteren Verarbeitung des Elektrobandlaminats herausstellen, wenn die Aktivierungstemperatur zur chemischen Vernetzung der Backlackschichten auf den einander zugewandten Flachseiten unter der Erweichungstemperatur der polymeren elektrischen Isolationsschicht liegt.

Weitere Verbesserungen in der Ausbildung einer standfesten stoffschlüssigen Verbindung können erreicht werden, wenn beim stoffschlüssigen Verbinden der Elektrobänder diese zusammengedrückt werden. Dies kann einer gleichmäßigeren chemischen Vernetzung beider Backlackschichten förderlich sein. Das Zusammendrücken kann verfahrenstechnisch einfach gelöst, vorzugsweise mit mindestens einem Walzenpaar aus gegenüberliegenden Walzen geschehen, um ein kontinuierliches Verfahren zu gewährleisten. Hierbei kann es auch von Vorteil sein, wenn die Elektrobänder mit fluchtenden Flachseiten zusammengedrückt werden. Im Allgemeinen wird erwähnt, dass mehrere Walzenpaare, insbesondere mit unterschiedlichem Walzspalt, die Gleichmäßigkeit der stoffschlüssigen Verbindung zwischen den Backlackschichten verbessern können.

Die Parameter der stoffschlüssigen Verbindung können weiter verbessert werden, wenn die Walzen mindestens eines Walzenpaares eine Walzenbombierung aufweisen.

Weisen die Walzen eines Walzenpaars eine konkave und die Walzen eines anderen Walzenpaars eine konvexe Walzenbombierung auf, kann dies das stoffschlüssige Fügen der Elektrobänder weiter verbessern. Vorzugsweise können diese Walzenpaare in der Reihung von Walzenpaaren vorzugsweise einander folgen.

Die elektrische Kurzschlußfestigkeit des Elektrobandlaminats kann erhöht werden, wenn mindestens eine der einander zugewandten Backlackschichten einen inkompressiblen und insbesondere abrasivfreien Füllstoff aufweist. Unter anderem kann damit ein beschädigungsfreies Haspeln des Elektrobandlaminats zu einem Coil sichergestellt werden. Außerdem kann dieser Füllstoff beim Stanzen des Elektrobandlaminats die Kurzschlußfestigkeit zwischen den Elektrobändern erhöhen. Vorzugsweise enthält hierfür der Füllstoff Bariumsulfat und/oder Lithopone.

Das erfindungsgemäße Verfahren kann sich insbesondere auszeichnen, wenn damit ein Coil mit einem Elektrobandlaminat hergestellt wird. Dies kann zu einem besonders standfesten Coil mit einem Elektrobandlaminat führen, aufweisend eine stoffschlüssige, chemisch vernetzte Verbindung zwischen mindestens zwei Elektrobändern. Besonders vorteilhaft ist ein Coil mit einem Elektrobandlaminat, aufweisend eine stoffschlüssige, chemisch vernetzte Verbindung aus mindestens einer Backlackschicht zwischen mindestens zwei Elektrobändern.

Die magnetische Kurzschlussfestigkeit des Coils bzw. seines Elektrobandlaminats kann erhöht werden, wenn die stoffschlüssige Verbindung einen inkompressiblen und insbesondere abrasivfreien Füllstoff aufweist.

Vorgenanntes kann durch die stoffschlüssige Verbindung mehrerer chemisch miteinander vernetzter Backlackschichten weiter erhöht werden, obwohl im Allgemeinen eine einzige chemisch vernetzte Backlackschicht zwischen zwei Elektrobandlaminaten durchaus ausreichen kann, solche eine stoffschlüssige Verbindung zu schaffen.

Das Elektrobandlaminat weist auf der, von der Flachseite mit der stoffschlüssigen Verbindung abgewandten Flachseite entweder eine Backlackschicht, deren Aktivierungstemperatur über der Aktivierungstemperatur zum chemischen Vernetzen der stoffschlüssigen Verbindung liegt, oder eine vernetzte, polymere und elektrische Isolationsschicht auf, deren Erweichungstemperatur über der Aktivierungstemperatur zum chemischen Vernetzen der stoffschlüssigen Verbindung liegt.

Vorstehend bezeichnetes Coil kann sich besonders dafür eignen, wenn mehrere aus dessen Elektrobandlaminat ausgestanzte Laminatteile für ein magnetisch leitfähiges Bauteil verwendet werden.

### Kurze Beschreibung der Zeichnungen

In den Figuren ist beispielsweise der Erfindungsgenstand anhand einer Ausführungsvariante dargestellt. Es zeigen
- Fig. 1: eine schematische Ansicht auf eine Vorrichtung zur Herstellung eines zu einem Coil aufgehaspelten Elektrobandlaminats und
- Fig. 2: eine vergrößerte Detailansicht der Fig. 1.

### Weg zur Ausführung der Erfindung

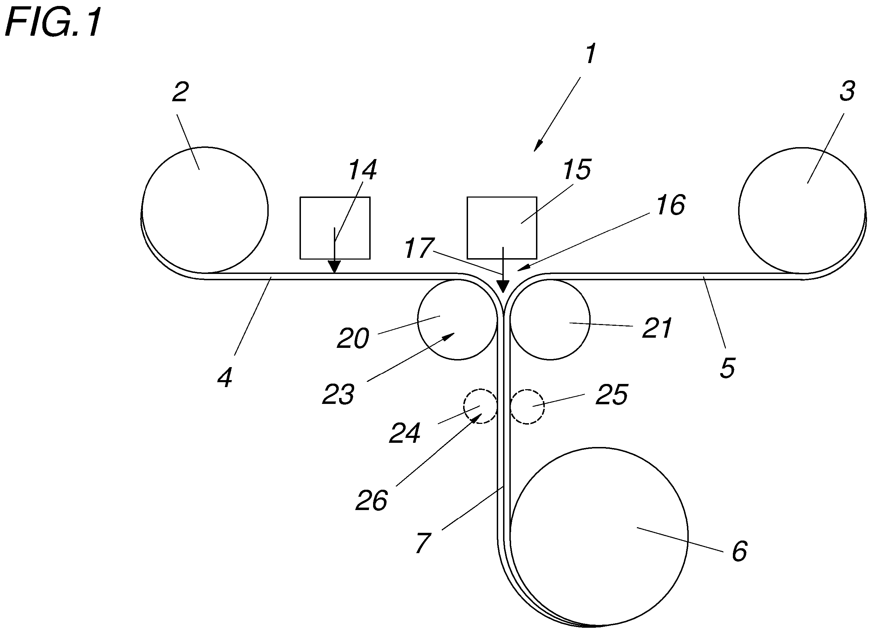

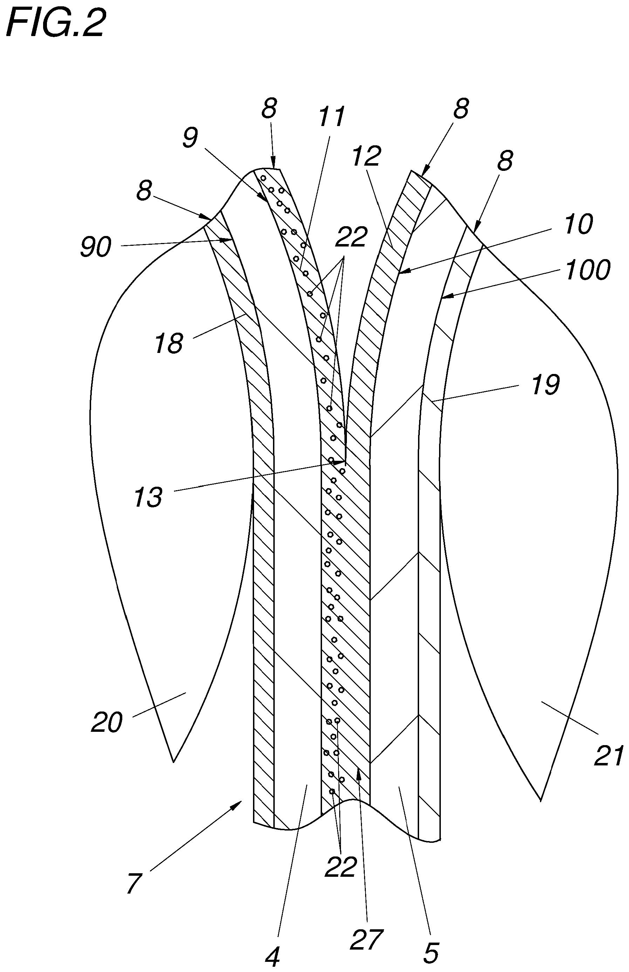

Gemäß der nach Fig. 1 schematisch dargestellten Vorrichtung 1 ist zu erkennen, dass zwei Coils 2, 3, die jeweils aus einem beschichteten Elektroband 4, 5 - im Ausführungsbeispiel - bestehen, abgewickelt, verbunden und zu einem Coil 6 zusammengefasst werden. Die Verbindung der beschichteten Elektrobänder 4, 5 erfolgt stoffschlüssig, wodurch ein Elektrobandlaminat 7 entsteht. Außerdem sind die verbundenen Elektrobänder 4, 5 voneinander isoliert - und zwar indem diese eine nach Fig. 2 näher dargestellte Beschichtung 8 aufweisen. Um Beschädigungen des Elektrobandlaminats 7 beim Aufhaspeln, beispielsweise durch ein unzureichendes stoffschlüssiges Fügeverfahren, zu vermeiden, werden die jeweils auf mindestens einer Flachseite 9, 10 mit einer Backlackschicht 11, 12 elektrisch isolierten Elektrobänder 4, 5 über einander zugewandten Backlackschichten 11, 12 aneinandergefügt und miteinander durch Aktivierung der chemischen Vernetzung beider Backlackschichten 11, 12 zu einem Elektrobandlaminat 7 stoffschlüssig verbunden.

Wie insbesondere in Fig. 2 zu erkennen, wird hierfür also zwischen den beiden Backlackschichten 11, 12 kein zusätzlicher Klebstoff benötigt. Die beiden Backlackschichten 11, 12 werden einander zugeführt und verbinden sich zu einer standfesten elektrischen Isolierung zwischen den beiden Elektrobändern 4 und 5. Damit wird eine vergleichsweise hohe Kurzschlusssicherheit des Elektrobandlaminats 7 gewährleistet - selbst, wenn das Elektrobandlaminat 7 in seiner Weiterverarbeitung erheblich verformt, umgeformt oder getrennt etc. wird. Zudem bietet die chemische Vernetzung beider Backlackschichten 11, 12 Vorteile in Bezug auf den Fügebereich 13 - insbesondere hinsichtlich der gleichmäßigen Beschaffenheit, hohen mechanischer Festigkeit usw. Dies erleichtert unter anderem das Haspeln des Elektrobands 7 zu einem Coil 6.

Diese chemische Vernetzung der beiden Backlackschichten 11, 12 wird, wie in Fig. 1 angedeutete, durch das Aufsprühen eines Armins 14 als Katalysator beschleunigt. 1-Methylimidazole hat sich hierfür ausgezeichnet - wobei allerdings 2-Methylimidazole und/oder 1,2-Diaminocyclohexan ebenso Verwendung finden können.

Wie außerdem in Fig. 1 zu erkennen, werden die Backlackschichten 11, 12 zu Ihrer chemischen Vernetzung thermisch aktiviert, indem sie mit Infrarot 17 einer Wärmequelle 15 im Bereich des Zulaufs 16 der beschichteten Elektrobleche 4, 5 bestrahlt werden.

Wie in Fig. 2 dargestellt, sind beide Flachseiten 9, 90 bzw. 10, 100 der jeweiligen Elektrobänder 4, 5 beschichtet. Hierbei ist jede Beschichtung 8 vorstellbar, insbesondere soll diese eine elektrisch isolierende Funktion erfüllen. Beispielsweise können diese Beschichtungen 8 der Flachseiten 90, 100 ebenso eine Backlackschicht 18 und/oder eine vernetzte, polymere und elektrische Isolationsschicht 19 darstellen.

Findet eine Backlackschicht 18 als elektrisch isolierende Beschichtung des Elektrobands 4 Verwendung, wird beim Fügen der Backlackschichten 11, 12 auf den einander zugewandten Flachseiten 9, 10 eine Aktivierungstemperatur zur chemischen Vernetzung der zu verbindenden Backlackschichten 11, 12 unter der Aktivierungstemperatur der auf der abgewandten Flachseite 90 vorgesehenen Backlackschicht 18 eingestellt - oder es wird für die Flachsseite 90 Backlack gewählt, der eine entsprechend höhere Aktivierungstemperatur aufweist. Dies verhindert auf einfache und effektive Weise ein Verkleben des Elektrobandlaminats 7 im aufgehaspelten Zustand.

Im Falle einer äußeren Beschichtung der Elektrobänder 4, 5 mit einer vernetzten, polymeren und elektrischen Isolationsschicht 19 wird die Aktivierungstemperatur zur chemischen Vernetzung der Backlackschichten 11, 12 auf den einander zugewandten Flachseiten 9, 10 unter der Erweichungstemperatur der polymeren elektrischen Isolationsschicht 19 eingestellt. Auch damit wird ein Verkleben des Elektrobandlaminats 7 im aufgehaspelten Zustand vermieden.

Es ist selbstverständlich nicht ausgeschlossen, dass die Beschichtungen 8 auf den beim stoffschlüssigen Fügen abgewandten Flachseiten 90, 100 der Elektrobänder 4, 5 aus dem gleichen Werkstoff bestehen können, was jedoch nicht näher dargestellt worden ist.

Indem beim stoffschlüssigen Verbinden beider Elektrobänder 4, 5 diese mit fluchtenden Flachseiten 9, 10 zusammengedrückt werden - und zwar mit Hilfe von gegenüberliegenden Walzen 20, 21 bzw. 24, 25, die nacheinander angeordnete Walzenpaare 23, 24 bilden. Damit wird das Elektrobandlaminat 7 mechanisch vergleichsweise hoch belastbar.

Die Walzen 20, 21 weisen eine nicht näher dargestellte konkave Walzenbombierung und die Walzen 24, 25 eine konvexe Walzenbombierung auf, was die stoffschlüsse Verbindung 27 zwischen den Elektrobändern 4, 5 in ihrer Stabilität verbessert - insbesondere, wenn diese beiden Walzenpaare nacheinander folgen. Ander Walzenbombierung bzw. Walzen, frei von einer Walzenbombierung sind jedoch ebenso vorstellbar.

Die Kurzschlussneigung der Elektrobänder 4, 5 bei einer anschließenden Weiterverwendung, insbesondere verursacht durch Stanzen, wird in diesem Ausführungsbeispiel durch Bariumsulfat als inkompressiblem Füllstoff 22 in der Backlackschicht 11 reduziert - wie dies der Fig. 2 entnommen werden kann.

Im Allgemeinen ist vorstellbar, dass in einer weiteren, nicht dargestellten Ausführungsform drei oder mehrere Elektrobänder in einem Verfahrensschritt miteinander verbunden werden. Dies kann zur Erzeugung von gewünschten Materialkombinationen, wie beispielsweise zwei harten Deckschichten und einer duktileren Zwischenschicht, beim Elektrobandlaminat ebenso vorteilhaft sein.

## Patentansprüche

1. Verfahren zur Herstellung eines zu einem Coil (6) aufgehaspelten Elektrobandlaminats (7), bei dem mindestens zwei elektrisch voneinander isolierte metallische Elektrobänder (4, 5) zu einem Elektrobandlaminat (7) stoffschlüssig verbunden und in einem weiteren Schritt zu einem Coil (6) aufgehaspelt werden, **dadurch gekennzeichnet, dass** die jeweils auf mindestens einer Flachseite (9, 10) mit einer Backlackschicht (11, 12) elektrisch isolierten Elektrobänder (4, 5) über einander zugewandte Backlackschichten (11, 12) aneinandergefügt und durch Aktivierung der chemischen Vernetzung der beiden Backlackschichten (11, 12) miteinander zu einem Elektrobandlaminat (7) stoffschlüssig verbunden werden, wobei die Backlackschichten (11, 12) zu ihrer chemischen Vernetzung thermisch aktiviert werden, wobei beschichtete Elektrobänder (4, 5) zu einem Elektrobandlaminat (7) zusammengefügt werden,
von denen mindestens ein Elektroband (4) auf beiden seiner Flachseiten (9, 90) mit einer Backlackschicht (11, 18) elektrisch isoliert ist, wobei die Aktivierungstemperatur zur chemischen Vernetzung der Backlackschichten (11, 12) auf den einander zugewandten Flachseiten (9, 10) unter der Aktivierungstemperatur der auf der abgewandten Flachseite (90) vorgesehenen Backlackschicht (18) liegt,
und/oder
von denen mindestens ein Elektroband (5) eine vernetzte, polymere und elektrische Isolationsschicht (19) auf der Flachseite (100), die der mit Backlack beschichteten Flachseite (10) gegenüberliegt, aufweist, wobei die Aktivierungstemperatur zur chemischen Vernetzung der Backlackschichten (11, 12) auf den einander zugewandten Flachseiten (9, 10) unter der Erweichungstemperatur der polymeren elektrischen Isolationsschicht (19) liegt.

2. Verfahren nach Anspruch 1, **dadurch gekennzeichnet, dass** auf mindestens einer Backlackschicht (11) ein Katalysator, insbesondere ein Amin (14), aufgebracht, insbesondere aufgesprüht, wird.

3. Verfahren nach Anspruch 2, **dadurch gekennzeichnet, dass** als Amin (14) 1-Methylimidazole, 2-Methylimidazole und/oder 1,2-Diaminocyclohexan verwendet wird.

4. Verfahren nach einem der Ansprüche 1 bis 3, **dadurch gekennzeichnet, dass** beim stoffschlüssigen Verbinden der Elektrobänder (4, 5) diese, insbesondere mit mindestens einem Walzenpaar (23, 26) aus gegenüberliegenden Walzen (20, 21 bzw. 24, 25), zusammengedrückt werden.

5. Verfahren nach Anspruch 4, **dadurch gekennzeichnet, dass** die Walzen (20, 21 bzw. 120, 21) mindestens eines Walzenpaares (23, 26) eine Walzenbombierung aufweisen.

6. Verfahren nach Anspruch 5, **dadurch gekennzeichnet, dass** die Walzen (20, 21) eines Walzenpaars (23) eine konkave und die Walzen (24, 25) eines anderen Walzenpaars (26) eine konvexe Walzenbombierung aufweisen, wobei diese Walzenpaare (23, 26) in der Reihung von Walzenpaaren vorzugsweise einander folgen.

7. Verfahren nach einem der Ansprüche 1 bis 6, **dadurch gekennzeichnet, dass** mindestens eine der einander zugewandten Backlackschichten (11, 12) einen inkompressiblen und insbesondere abrasivfreien Füllstoff (22), vorzugsweise enthaltend Bariumsulfat und/oder Lithopone, aufweist.

8. Coil mit einem Elektrobandlaminat (7), aufweisend eine stoffschlüssige, chemisch vernetzte Verbindung (27) aus mindestens einer Backlackschicht (11, 12) zwischen mindestens zwei Elektrobändern (4, 5), wobei das Elektrobandlaminat (7) auf der, von der Flachseite (9 bzw. 10) mit der stoffschlüssigen Verbindung (27) abgewandten Flachseite (90, 100) entweder eine Backlackschicht (18), deren Aktivierungstemperatur über der Aktivierungstemperatur zum chemischen Vernetzen der stoffschlüssigen Verbindung (27) liegt, oder eine vernetzte, polymere und elektrische Isolationsschicht (19) aufweist, deren Erweichungstemperatur über der Aktivierungstemperatur zum chemischen Vernetzen der stoffschlüssigen Verbindung (27) liegt.

9. Coil nach Anspruch 8, **dadurch gekennzeichnet, dass** die stoffschlüssige Verbindung (27) einen inkompressiblen und insbesondere abrasivfreien Füllstoff (22) aufweist.

10. Coil nach Anspruch 8 oder 9, **dadurch gekennzeichnet, dass** die stoffschlüssige Verbindung (27) mehrere chemisch miteinander vernetzte Backlackschichten (11, 12) aufweist.

11. Verwendung mehrerer aus einem Elektrobandlaminat (7) des Coils (6) nach Anspruch 8, 9 oder 10 ausgestanzter Laminatteile für ein magnetisch leitfähiges Bauteil.

## Claims

1. A method for producing an electric strip laminate (7) wound into a coil (6), in which at least two metallic electric strips (4, 5) that are electrically insulated from each other are integrally bonded to form an electric strip laminate (7) and in another step, are wound into a coil (6), **characterized in that** the electrical strips (4, 5), which are each electrically insulated with a baked enamel layer (11, 12) on at least one flat side (9, 10), are joined to each other by means of baked enamel layers (11, 12) facing each other and are integrally bonded to form an electric strip laminate (7) by activating the chemical cross-linking of the two baked enamel layers (11, 12), wherein the baked enamel layers (11, 12) are thermally activated in order to produce their chemical cross-linking, wherein coated electric strips (4, 5) are joined together to form an electric strip laminate (7),
of which at least one electric strip (4) is electrically insulated with a baked enamel layer (11, 18) on both of its flat sides (9, 90) and the activation temperature for chemically cross-linking the baked enamel layers (11, 12) on the flat sides (9, 10) facing each other is below the activation temperature of the baked enamel layer (18) provided on the flat side (90) facing away,
and/or
of which at least one electric strip laminate (7) has a cross-linked polymer electrical insulation layer (19) on the flat side (100) opposite from the flat side (10) that is coated with baked enamel and wherein the activation temperature for chemically cross-linking the baked enamel layers (11, 12) on the flat sides (9, 10) facing each other is below the softening temperature of the polymer electrical insulation layer (19).

2. The method according to claim 1, **characterized in that** a catalyst, more particularly an amine (14), is applied, more particularly sprayed, onto at least one baked enamel layer (11).

3. The method according to claim 2, **characterized in that** 1-methylimidazole, 2-methylimidazole, and/or 1,2-diaminocyclohexane is used as the amine (14).

4. The method according to one of claims 1 through 3, **characterized in that** during the integral bonding of the electric strips (4, 5), they are pressed together, more particularly with at least one roller pair (23, 26) composed of opposing rollers (20, 21 or 24, 25).

5. The method according to claim 4, **characterized in that** the rollers (20, 21 or 120, 21) of at least roller pair (23, 26) have a roller camber.

6. The method according to claim 5, **characterized in that** the rollers (20, 21) of one roller pair (23) have a concave roller camber and the rollers (24, 25) of another roller pair (26) have a convex roller camber and these roller pairs (23, 26) preferably come one after the other in the series of roller pairs.

7. The method according to one of claim(7)s 1 through 6, **characterized in that** at least one of the baked enamel layers (11, 12) facing each other has an incompressible and more particularly abrasive-free filler (22), preferably containing barium sulfate and/or lithopone.

8. A coil with an electric strip laminate (7), having an integral, chemically cross-linked bond (27) composed of at least one baked enamel layer (11, 12) between at least two electric strips (4, 5), wherein the electric strip laminate (7) on the flat side (90, 100) facing away from the flat side (9 or 10) with the integral bond (27), has either a baked enamel layer (18), whose activation temperature is above the activation temperature for the chemical cross-linking of the integral bond (27), or has a cross-linked polymer electrical insulation layer (19), whose softening temperature is above the activation temperature for the chemical cross-linking of the integral bond (27).

9. The coil according to claim 8, **characterized in that** the integral bond (27) has an incompressible and more particularly abrasive-free filler (22).

10. The coil according to claim 8 or 9, **characterized in that** the integral bond (27) has a plurality of baked enamel layers (11, 12) that are chemically cross-linked to one another.

11. A use of several laminate parts that are stamped from an electric strip laminate (7) of the coil (6) according to claim 8, 9 or 10 for a magnetically conductive component.

## Revendications

1. Procédé pour la fabrication d'un feuillard magnétique stratifié (7) enroulé en rouleau (6), dans lequel au moins deux feuillards magnétiques (4, 5) métalliques isolés électriquement l'un de l'autre sont liés en solidarité de matière pour former un feuillard magnétique stratifié (7) et enroulés en rouleau (6) dans une étape suivante, **caractérisé en ce que** les feuillards magnétiques (4, 5) isolés sur au moins une face plate (9, 10) avec une couche de vernis de liaison (11, 12) sont assemblés l'un à l'autre à l'aide de couches de vernis de liaison (11, 12) tournées l'une vers l'autre et liés l'un à l'autre par solidarité de matière par l'activation de la polymérisation chimique des deux couches de vernis de liaison (11, 12) pour former un feuillard magnétique stratifié (7), les couches de vernis de liaison (11, 12) étant activées thermiquement en vue de leur réticulation chimique, des feuillards magnétiques enduits (4, 5) étant assemblés pour former un feuillard magnétique stratifié (7),
au moins un feuillard magnétique (4) étant isolé sur ses deux faces plates (9, 90) par une couche de vernis de liaison (11, 18), la température d'activation pour la réticulation chimique des couches de vernis de liaison (11, 12) sur les faces plates (9, 10) tournées l'une vers l'autre étant inférieure à la température d'activation de la couche de vernis de liaison (18) de la face plate (90) tournée à l'opposé,
et/ou
au moins un feuillard électrique (5) faisant face à une couche réticulée, polymérisée et isolante électrique (19) sur la face plate (100) qui fait face à la face plate enduite de vernis de liaison (10), la température d'activation pour la réticulation chimique des couches de vernis de liaison (11, 12) sur les faces plates (9, 10) tournées l'une vers l'autre étant inférieure à la température de plastification de la couche polymère isolante électrique (19).

2. Procédé selon la revendication 1, **caractérisé en ce qu'**un catalyseur, de préférence une amine (14), est appliqué, de préférence pulvérisé, sur au moins une couche de vernis de liaison (11).

3. Procédé selon la revendication 2, **caractérisé en ce que** l'amine (14) utilisée est du 1-méthylimidazole, du 2-méthylimidazole et/ou du 1,2-diaminocyclohexane.

4. Procédé selon l'une des revendications 1 à 3, **caractérisé en ce que**, lors de leur assemblage par solidarité de matière, les feuillards électriques (4, 5) sont compressés, en particulier avec au moins une paire de rouleaux (23, 26) formée de rouleaux (20, 21 ou 24, 25) qui se font face.

5. Procédé selon la revendication 4, **caractérisé en ce que** les rouleaux (20, 21 ou 120, 21) d'au moins une paire de rouleaux (23, 26) présentent un bombement des rouleaux.

6. Procédé selon la revendication 5, **caractérisé en ce que** les rouleaux (20, 21) d'une paire de rouleaux (23) présentent un bombement concave et les rouleaux (24, 25) d'une autre paire de rouleaux (26) un bombement convexe, ces paires de rouleaux (23, 26) se suivant de préférence dans la succession de paires de rouleaux.

7. Procédé selon l'une des revendications 1 à 6, **caractérisé en ce qu'**au moins une des couches de vernis de liaison (11, 12) tournées l'une vers l'autre présente une charge de remplissage (22) incompressible et, en particulier, sans abrasif, contenant de préférence du sulfate de baryum et/ou du lithopone.

8. Rouleau fait d'un feuillard magnétique stratifié (7), présentant une liaison par solidarité de matière réticulée chimiquement (27) composée d'au moins une couche de vernis de liaison (11, 12) entre au moins deux feuillards électriques (4, 5), dans lequel le feuillard magnétique stratifié (7) comporte, sur la face plate (90, 100) tournée à l'opposé de la face plate (9 ou 10) portant la liaison par solidarité de matière (27), soit une couche de vernis de liaison (18) dont la température d'activation est supérieure à la température d'activation pour la réticulation chimique de la liaison par solidarité de matière (27), soit une couche réticulée, polymère et isolante électrique (19) dont la température de plastification est supérieure à la température d'activation pour la réticulation chimique de la liaison par solidarité de matière (27).

9. Rouleau selon la revendication 8, **caractérisé en ce que** la liaison par solidarité de matière (27) contient une charge de remplissage (22) incompressible et, en particulier, sans abrasif.

10. Rouleau selon la revendication 8 ou 9, **caractérisé en ce que** la liaison par solidarité de matière (27) comporte plusieurs couches de vernis de liaison (11, 12) réticulées chimiquement entre elles.

11. Utilisation de plusieurs pièces stratifiées découpées dans un feuillard magnétique stratifié (7) du rouleau (6) selon la revendication 8, 9 ou 10 pour un composant conducteur magnétique.
